Europäisches Patentamt

European Patent Office

Office européen des brevets

(19)

(11) Veröffentlichungsnummer : **0 177 891**
**B1**

(12) **EUROPÄISCHE PATENTSCHRIFT**

(45) Veröffentlichungstag der Patentschrift :
04.05.88

(51) Int. Cl.⁴ : **G 01 G 21/23, G 01 G 21/06**

(21) Anmeldenummer : **85112493.3**

(22) Anmeldetag : **03.10.85**

(54) **Wägevorrichtung.**

(30) Priorität : **05.10.84 DE 8429287 U**
**03.08.85 DE 8522425 U**

(43) Veröffentlichungstag der Anmeldung :
**16.04.86 Patentblatt 86/16**

(45) Bekanntmachung des Hinweises auf die Patenterteilung : **04.05.88 Patentblatt 88/18**

(84) Benannte Vertragsstaaten :
**CH DE FR GB IT LI NL SE**

(56) Entgegenhaltungen :
**EP-A- 0 050 714**
**WO-A-82 /020 24**
**US-A- 4 223 752**
**PATENTS ABSTRACTS OF JAPAN,Band 6, Nr. 166 (P-138)[1044], 31. August 1982; & JP-A-57 82 720**

(73) Patentinhaber : **Balduin, Franz**
**Eilendorferstrasse 147**
**D-5100 Aachen (DE)**

(72) Erfinder : **Balduin, Franz**
**Eilendorferstrasse 147**
**D-5100 Aachen (DE)**
Erfinder : **Adenauer, Ernst**
**Guaitastrasse 18**
**D-5100 Aachen (DE)**

(74) Vertreter : **Rauh, Wolfgang K., Dipl.-Ing. Patentanwalt**
**Mittelstrasse 55**
**D-5100 Aachen (DE)**

EP 0 177 891 B1

## Beschreibung

Die Erfindung betrifft eine Wägevorrichtung mit mindestens drei auf ein Rechengerät einwirkenden Wägemeßeinrichtungen.

Wird eine auf drei Wägemeßeinrichtungen oder Wägezellen einwirkende Wägeplatte einseitig, d. h. exzentrisch stark belastet, so kann es vokommen, daß sie sich von einer Wägeerinrichtung abhebt und am Gehäuse abstützt. Dabei ergeben sich Fehlwägungen. Um dies zu vermeiden, kann man zwar Anschläge oder dgl. am Gehäuse vorsehen, doch stützt sich auch hierbei die Wägeplatte am Gehäuse ab und es ergeben sich Ungenauigkeiten des Wägeergebnisses.

Der Erfindung liegt die Aufgabe zugrunde, eine solche Wägevorrichtung so zu gestalten, daß sie auch dann sichere Wägeergebnisse liefert, wenn sie einer exzentrischen Belastung ausgesetzt ist.

Die gestellte Aufgabe wird gemäß der Erfindung durch die kennzeichnenden Merkmale des Anspruches 1 gelöst.

Die an der Wägeplatte angreifenden Wägemeßeinrichtungen werden auch bei exzentrischer Belastung voll aktiviert, d. h. sie unterliegen stets einer negativen und/oder positiven Belastung (Zug- und/oder Druckbelastung), die, addiert, das richtige Wägeergebnis liefern.

Eine solche Wägevorrichtung ist besonders vorteilhaft an einem Gabelhubwagen für den Palettentransport unterzubringen bzw. mit diesem zu integrieren.

Beim Verladen und/oder Transportieren von Paletten ist es nämlich vielfach erwünscht, das Gewicht der auf der Palette befindlichen Ware zu kennen. Um dies zu erreichen, gibt es ortsfeste Waagen in der Form eines liegenden U, dergestalt, daß der mit einer Palette beladene Hubwagen zwischen die Schenkel der Waage fährt und die Last auf diesen Schenkeln absetzt. Nach erfolgter Wägung wird die Last wieder vom Hubwagen aufgenommen. Diese Arbeistweise ist vielfach zu umständlich.

Es zeigte sich, daß es nicht ohne weiteres möglich war, auf Gabelhubwagen eine Wägevorrichtung anzuordnen, d. h. Wägemeßeinrichtungen in geeigneter Weise mittig in jedem Tragholm unterzubringen und trotzdem ein einwandfreies Betätigen des Hubwagens in seiner eigentlichen Funktion zu ermöglichen.

Gemäß einer vorteilhaften Ausgestaltung der Erfindung gemäß Anspruch 2 ist diese Aufgabe ebenfalls gelöst.

Nachstehend ist die Erfindung anhand der Zeichnung näher erläutert. Es zeigen:

Fig. 1 eine schematische Draufsicht auf eine Wägevorrichtung nach der Erfindung,

Fig. 2 einen schematischen Längsschnitt durch eine Wägevorrichtung bei einem Gabelhubwagen,

Fig. 3 einen schematischen Querschnitt durch eine Wägevorrichtung der Fig. 2,

Fig. 4 eine schematische Seitenansicht eines Hubwagens mit Wägevorrichtung,

Fig. 5 eine Draufsicht,

Fig. 6 eine Einzelheit und

Fig. 7 einen vergrößerten Querschnitt durch einen Tragholm.

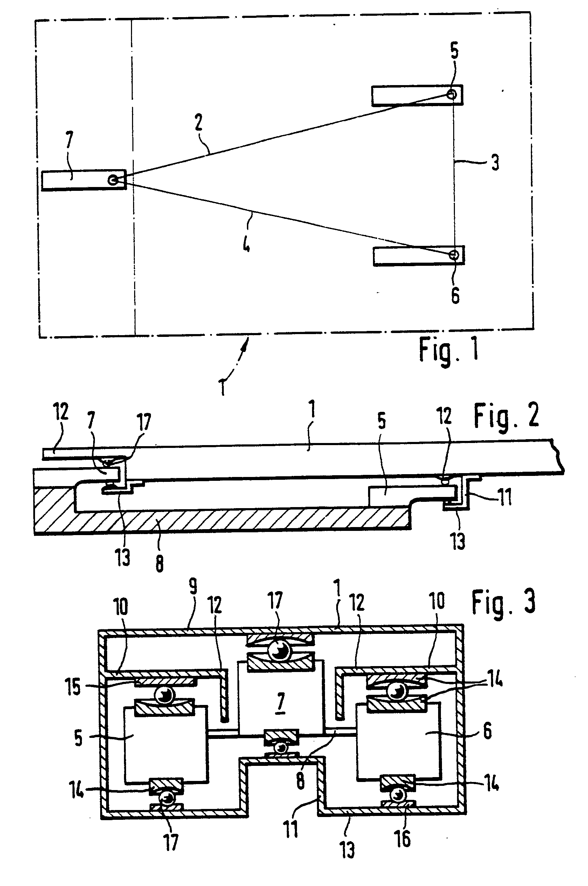

Fig. 1 zeigt in der Draufsicht schematisch eine Wägeplatte 1 mit drei an ihr angreifenden Wägemeßeinrichtungen 5, 6, 7 die so am Gehäuse angeordnet sind, daß ihre Verbindungslinien, 2, 3, 4 ein Dreieck bilden, so daß sich eine einwandfreie Dreipunktlagerung ergibt.

Fig. 2 zeigt schematisch im Längsschnitt eine Wägevorrichtung gemäß der Erfindung bei einem Gabelhubwagen für den Palettentransport, von dem lediglich das das Untergestell bildende Gehäuse 8 und die Wägeplatte 1 wiedergegeben sind.

Die in Fig. 3 wiedergegebene Querschnittsdarstellung zeigt die Wägeplatte 1 in der Form einer Hubgabel mit einem Querhaupt 9 und zwei hiermit fest verbundenen, auf Abstand zueinander parallel angeordneten Tragholmen 10, sowie mit einem, einen Teil der Wägeplatte 1 bildenden und mit dieser fest verbundenen Abdeckglied 11, das lediglich schematisch so dargestellt ist, daß es seine feste Verbindung mit den anderen Teilen 9 und 10 zeigt.

Zwischen zwei Tragholmen 12, 13 die von der Wägeplatte 1 und dem Abdeckglied 11 gebildet sind (Fig. 2), befinden sich drei fest mit dem Gehäuse 8 verbundene Wägemeßeinrichtungen 5, 6 und 7, die (Fig. 2) in bekannter Weise mit einer elektronischen Rechen- und Anzeigeeinheit verbunden sind, die selbst nicht Gegenstand der Erfindung ist.

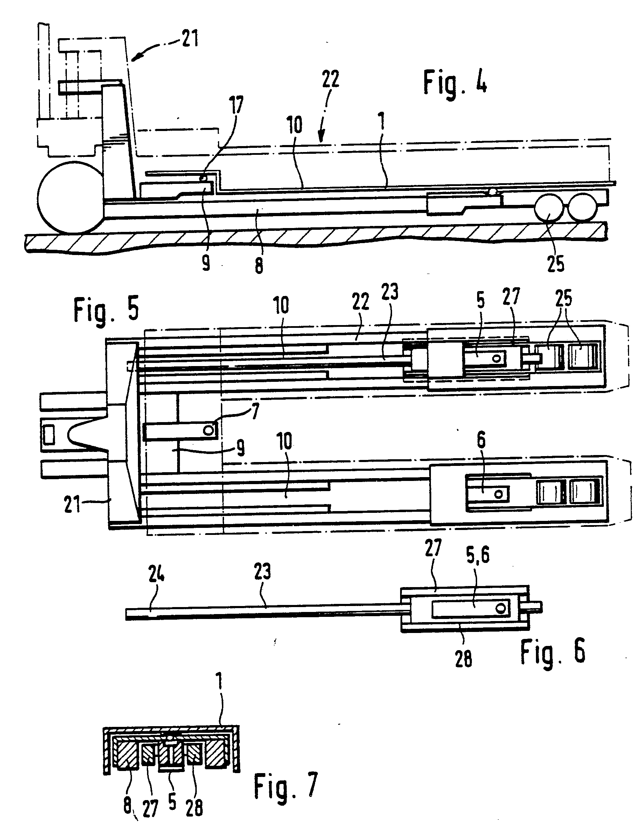

Der in den Fig. 4 und 5 dargestellte Hubwagen 22 besteht aus einem deichselgeführten Lenkkopf 21 mit einem daran heb- und senkbar befestigten Untergestell 8, das seinerseits aus den beiden parallelen Tragholmen 10 und dem am Lenkkopf 21 angeordneten, die Tragholme 10 starr verbindenden Querhaupt 9 gebildet ist. An den freien Enden der Tragholme 10 sind an (nicht dargestellten) Hebeln Rollen 25 gelagert. An jedem Hebel greift eine Koppelstange 23 an, deren vorderes Ende 24 an einem im Lenkkopf 21 angeordneten (nicht dargestellten) Kniehebel gelenkig angreift. Mittels der Koppelstange 23 wird eine Parallelbewegung der Hebel bewirkt, wobei die Rollen 25 gegenüber dem Untergestell verschwenkt und dieses entsprechend angehoben werden.

Wie insbesondere Fig. 5 zeigt, sind auf dem Hubwagen 22 die Wägemeßeinrichtungen 7, 5, 6 zur Erzielung genauer Ergebnisse mittig auf dem Querhaupt 9 sowie, jeweils mittig auf jedem Tragholm 10 angeordnet und zwar, wie die Zeichnung zeigt, möglichst weit auseinander.

Die Wägemeßeinrichtungen 7, 5, 6 tragen jeweils auf ihrem beweglichen Stellglied eine Auflagerpfanne 14 und in dieser eine Kugelelement 17. Die Tragholme 10 und das Querhaupt des Untergestells 8 werden durch die entsprechend haubenförmig ausgebildete Wägeplatte 1 bedeckt. Diese weist an den den Wägemeßeinrichtungen 7, 5, 6 zugeordneten Stellen an ihrer Unterseite Auflagerflächen auf, wobei die den Wägemeßeinrichtungen 7 und 6 des Querhauptes 9 bzw. des einen Tragholmes 10 zugeordneten Auflagerflächen als Auflagerpfanne 14 und die der Wägemeßeinrichtung 5 zugeordnete Auflagerfläche als ebene Auflagerplatte 15 ausgebildet sind. Auf diese Weise können Auflagerungenauigkeiten, thermische Ausdehnungen usw. ausgeglichen werden.

Wie die Fig. 5 und 6 zeigen, ist die Koppelstange 23 im Bereich der an den Tragholmen 10 angeordneten Wägemeßeinrichtungen 5, 6 zweistrangig ausgebildet, wobei die beiden Stränge 27, 28 der Koppelstange 23 die Wägemeßeinrichtungen 5, 6 mit Abstand umgeben. In axialer Richtung ist dabei der Hub zur Betätigung der Hebel für die Rollen 25 zu berücksichtigen.

Durch diese Ausbildung der Koppelstange 23 ist es gelungen, eine Möglichkeit zu schaffen, die Wägemeßeinrichtungen 5 und 6 zentrisch am Tragholm 10 anzuordnen, ohne die Betätigung der Rollen 25 mittels der Koppelstangen 23 zu beeinträchtigen.

Wie insbesondere Fig. 3 zeigt, tragen die beweglichen Stellglieder der Wägemeßeinrichtungen 5, 6, 7 jeweils eine pfannenartige Lagerplatte 14 ober- und unterhalb der Wägemeßeinrichtungen 5, 6, 7 denen an der Wägeplatte 1 und am Abdeckglied 11 entsprechende Gegendruckplatten 15, 16 zugeordnet sind. Zwischen den Lager- und Gegendruckplatten 14 bzw. 15, 16 ist jeweils mit geringem Spiel die Kugel 17 angeordnet. Um Verspannungen zu vermeiden, ist es zweckmäßig, wenn mindestens eine der Gegendruckplatten jeder Dreiergruppe als ebene Platte 16 ausgebildet ist.

Wird die Wägeplatte 1 zentrisch belastet, so werden alle beweglichen Stellglieder der Wägemeßeinrichtungen 5, 6, 7 an ihrer Oberseite in bekannter Weise auf Druck belastet.

Wird die Wägeplatte 1 dagegen exzentrisch belastet, so werden lediglich die Stellglieder von zwei Wägemeßeinrichtungen an ihrer Oberseite auf Druck beansprucht, während sich das Stellglied der dritten Wägemeßeinrichtung mit seiner Unterseite an einem Schenkel 13 des Abdeckgliedes 11 abstützt. Die hierdurch entstehende Umkehrung der Krafteinleitung an der dritten Wägemeßeinrichtung bewirkt einen Ausgleich der auf die beiden anderen Wägemeßeinrichtungen einwirkenden Mehrbelastung, so daß sich ein rechnerischer Summenausgleich feststellen und darstellen läßt.

## Patentansprüche

1. Wägevorrichtung mit mindestens drei auf ein Rechengerät einwirkenden Wägemeßeinrichtungen, dadurch gekennzeichnet, daß die Wägemeßeinrichtungen (5-7) an einer Wägeplatte (1) angreifen, wobei jede Wägemeßeinrichtung (5-7) zwischen zwei jede Wägemeßeinrichtung (5-7) über- und untergreifenden Schenkeln (12, 13) der Wägeplatte (1) der Vorrichtung angeordnet ist.

2. Wägevorrichtung nach Anspruch 1, dadurch gekennzeichnet, daß zwischen jeder Wägemeßeinrichtung (5, 6, 7) und jedem Schenkel (12, 13) jeweils mit geringem Spiel eine Kugel (17) gelagert ist.

3. Wägevorrichtung nach Anspruch 1 oder 2, dadurch gekennzeichnet, daß die Wägeplatte (1) die Ladefläche eines Gabelhubwagens (22) ist, der aus zwei gabelförmig angeordneten, durch eine Traverse (9) starr miteinander verbundenen parallelen Tragholmen (10) mit an ihren Enden gelagerten Rollen (25), einem am vorderen Ende angeordneten, deischselgeführten Lenkkopf (21) sowie mit diesem und den Hebeln der Rollen (25) gelenkig verbundenen, in den Tragholmen (10) angeordneten Koppelstangen (23) besteht, daß das Gehäuse (8) das Untergestell des Gabelhubwagens (22) bildet und außer einer mittigen, hinter dem Lenkkopf (21) angeordneten Wägemeßeinrichtung (7) jeweils mindestens eine Wägemeßeinrichtung (5, 6) mittig in jedem Tragholm (10) vor der jeweiligen Rolle (25) trägt und daß jeder Koppelstange (23) mindestens im Bereich der im Tragholm (10) befindlichen Wägemeßeinrichtungen (5, 6) zweistrangig so ausgebildet ist, daß ihre Teilstränge (27, 28) die zentrisch im Tragholm (10) angeordneten Wägemeßeinrichtungen (5, 6) mit Abstand umgeben.

4. Wägevorrichtung nach einem der Ansprüche 1 bis 3, dadurch gekennzeichnet, daß die Wägemeßeinrichtungen (7, 5, 6) jeweils eine Auflagerpfanne (14) und ein lose darin liegendes Kugelelement (17) tragen und daß die Wägeplatte (1) an ihrer den Kugelelementen (17) zugewandten Unterseite Gegendruckflächen aufweist, von denen mindestens zwei ebenfalls als Auflagerpfannen (14) und mindestens eine als ebene Auflagerplatte (15) ausgebildet sind.

5. Wägevorrichtung nach Anspruch 4, dadurch gekennzeichnet, daß die Auflagerflächen an der Unterseite der Wägeplatte (1) über dem einen Tragholm (10) als Auflagerpfanne (14) und über dem anderen Tragholm (10) als Auflagerplatten (15) ausgebildet sind.

## Claims

1. A weighing device with at least three weight measuring devices inputting to a computer, characterised in that the weight measuring device (5-7) engage a weighing plate (1), wherein each weight measuring device (5-7) is located between two arms (12, 13) of the weighing plate (1) of the device engaging each weight measuring device (5-7) above and below.

2. A weighing device according to claim 1 characterised in that a ball (17) is supported between each weight measuring device (5, 6, 7) and each arm (12, 13) with a slight amount of play.

3. A weighing device according to claim 1 or 2, characterised in that the weighing plate (1) is the loading surface of a fork lift truck (22) which consists of two fork-like parallel supporting arms (10) rigidly connected together by means of a cross-beam (9) and bearing rollers (25) mounted at their ends, a shaft guided connecting head (21) located at the front end and coupling bars (23) located in the arms (10) pivotally connected to the head and the levers of rollers (25), that the housing (8) forms the underframe of the fork lift truck (22) and bears at least one weight measuring device (5, 6) in the centre of each arm (10) in front of the corresponding roller (25) in addition to a weight measuring device (7) located centrally behind the connecting head (21) and that each coupling bar (23) is of double construction at least in the region of the weight measuring devices (5, 6) located on an arm (10) in such a way that parts thereof (27, 28) pass around the weight measuring devices (5, 6) mounted centrally on arm (10) at a distance.

4. A weighing device according to one of claims 1 to 3, characterised in that the weight measuring devices (7, 5, 6) each have a supporting pan (14) and a ball element (17) loosely located therein and that the weighing plate (1) has counter pressure surfaces on its underside facing the ball elements (17), of which at least two are constructed as supporting pans (14) and at least one is constructed as a flat supporting plate (15).

5. A weighing device according to claim 4, characterised in that the supporting surfaces on the underside of the weighing plate (1) over one arm (10) is constructed as a supporting pan (14) and over the other arm (10) is constructed as a supporting plate (15).

## Revendications

1. Dispositif de pesée comportant au moins trois dispositifs de mesure pour la pesée agissant sur un calculateur, caractérisé en ce que les dispositifs de mesure (5-7) s'appliquent sur une plaque de pesée (1), chaque dispositif de mesure (5-7) étant disposé entre deux branches (12, 13) de la plaque de pesée (1) du dispositif, s'appliquant sur et sous chaque dispositif de mesure (5-7).

2. Dispositif de pesée selon la revendication 1, caractérisé en ce que, entre chaque dispositif de mesure pour la pesée (5, 6, 7) et chaque branche (12, 13), est montée, à chaque fois, une bille (17) avec un faible jeu.

3. Dispositif de pesée selon la revendication 1 ou 2, caractérisé en ce que la plaque de pesée (1) est la surface de charge d'un chariot élévateur à fourche (22), qui est constitué de deux longerons (10) parallèles reliés rigidement l'un à l'autre par une traverse (9) et disposés en forme de fourche, ayant des galets (25) montés à leurs extrémités, un guidon à timon (21) disposé à l'extrémité avant, ainsi que des bielles (23) disposées dans les longerons (10), reliées de façon articulée au guidon et aux leviers des galets (25), en ce que le châssis forme la base du chariot (22) et porte en plus d'un dispositif de mesure pour la pesée (7) central, disposé derrière le guidon (21), à chaque fois,, au moins un dispositif de mesure pour la pesée (5, 6) au milieu de chaque longeron (10) devant le galet respectif (25), et en ce que chaque bielle (23) est doublée au moins dans la zone des dispositifs de mesure (5, 6) se trouvant dans le longeron (10), de sorte que ses parties (27, 28) entourent avec un écartement les dispositifs de mesure (5, 6) disposés au milieu du longeron (10).

4. Dispositif de pesée selon une des revendications 1 à 3, caractérisé en ce que les dispositifs de mesure (7, 5, 6) portent, à chaque fois, une cavité d'appui (14) et une bille (17) s'y trouvant mobile, et en ce que la plaque de pesée (1) présente des surfaces de contre-pression sur sa face inférieure proche des billes (17), desquelles au moins deux sont de même réalisées sous forme de cavités d'appui (14) et au moins une sous forme de plaque d'appui plane (15).

5. Dispositif de pesée selon la revendication 4, caractérisé en ce que les surfaces d'appui sur la face inférieure de la plaque de pesée (1) sont réalisées sur un longeron (10) sous forme d'une cavité d'appui (14) et sur l'autre longeron (10) sous forme d'une plaque d'appui (15).

Fig. 1

Fig. 2

Fig. 3

Fig. 4

Fig. 5

Fig. 6

Fig. 7